# EUROPÄISCHE PATENTSCHRIFT

(11) **EP 3 471 855 B1**
(45) Veröffentlichungstag und Bekanntmachung des Hinweises auf die Patenterteilung: **24.03.2021**
(21) Anmeldenummer: 17731897.9
(22) Anmeldetag: 21.06.2017
(51) Int. Cl.: B01D 46/00, B01D 46/52

(54) **FILTERELEMENT, FILTERANORDNUNG UND VERFAHREN**
FILTER ELEMENT, FILTER ARRANGEMENT, AND METHOD
ÉLÉMENT FILTRANT, DISPOSITIF DE FILTRATION ET PROCÉDÉ ASSOCIÉ

(30) Priorität: 21.06.2016 DE 102016007459
(43) Veröffentlichungstag der Anmeldung: 24.04.2019
(73) Patentinhaber: Mann+Hummel GmbH, 71636 Ludwigsburg (DE)
(72) Erfinder: WESTENBERG, Jens, 90425 Nürnberg (DE)
(74) Vertreter: Seyboth, Matthias
(86) Internationale Anmeldenummer: PCT/EP2017/065306
(87) Internationale Veröffentlichungsnummer: WO 2017/220691

(56) Entgegenhaltungen:
- EP-A1- 1 900 413
- EP-A1- 3 015 155
- DE-A1- 10 249 577
- DE-A1- 19 844 874

## Beschreibung

### Technisches Gebiet

Die vorliegende Erfindung betrifft ein Filterelement, insbesondere einen Innenraumfilter zum Filtern von Luft für den Innenraum eines Fahrzeugs oder Gebäudes. Weiterhin betrifft die Erfindung eine Filteranordnung mit einem solchen Filterelement. Noch weiterhin betrifft die Erfindung ein Verfahren zum Herstellen eines Filterelements.

Obwohl auf beliebige Filterelemente und -anordnungen anwendbar, werden die vorliegende Erfindung sowie die ihr zugrunde liegende Problematik nachfolgend für einen Innenraumfilter eines Kraftfahrzeugs beschrieben.

Die zunehmende Luftverunreinigung, insbesondere in Großstädten, in Verbindung mit dem Einsatz moderner Klimaanlagen macht es erforderlich, die von außen in den Innenraum eines Kraftfahrzeugs geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. adsorbieren sollen.

Zur Filterung von Luft für den Innenraum eines Kraftfahrzeugs werden häufig gefaltete bzw. plissierte Filtermaterialien, wie etwa Filtervliese, die ein Faltenpack bilden, eingesetzt. Hierzu wird ein zunächst flächiger Filtermaterialbogen zickzackförmig gefaltet. Das Faltenpack wird beispielsweise von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs installiert sein.

### Stand der Technik

Es ist bekannt, Filterelemente zu verwenden, die ein mehrlagiges Filtermedium aufweisen. Ein solches mehrlagiges Filtermedium kann eine Adsorptionslage mit Aktivkohle aufweisen. An einer Schnittkante eines solchen Filtermediums ensteht in der Regel ein offener Bereich, an dem die Aktivkohle herausrieseln kann. Dies wird im Stand der Technik z.B. durch ein Seitenband, insbesondere eines aus Vliesstoff, oder auch durch Umspritzen der Schnittkante verhindert. Die DE 20 2006 018 863 U1 offenbart beispielsweise ein Filterelement mit Aktivkohleschicht, welche mit einer oberen Deckschicht und einer unteren Deckschicht zu einer Filterlage verbunden ist, wobei die in einer Schicht angeordneten Aktivkohlepartikel zwischen den Deckschichten mittels Verklebung durch eine Klebstoffschicht mit den beiden Deckschichten fixiert wird, so dass ein Verrutschen der Aktivkohle unterbunden wird. Der Klebstoffanteil wird dabei so gering gewählt, dass die Aktivkohlepartikel an den Deckschichten ausreichend stark haften, jedoch lediglich ein möglichst kleiner Druckabfall zwischen Roh- und Reinseite bedingt ist. Nachteilig an dieser Fixierung durch Verklebung der Aktivkohlepartikel ist, dass ein Herausrieseln der Kohle aus offenen Schnittkanten nicht verhindert werden kann. Die hierfür benötigte Klebstoffmenge würde die Adsorptionszugänge nahezu komplett verschließen. Ein solches Filterelement wäre nicht mehr in der Lage, seine eigentliche Funktion, nämlich die Adsorption von Schadgasen sowie Gerüchen, zu erfüllen. Die Versiegelung der Schnittkante erfolgt in der DE 20 2006 018 863 U1 daher herkömmlich durch ein Seitenvlies oder eine Klebstoffleiste.

Ferner ist aus DE 102 49 577 A1 ein Filterelement bekannt, bei dem die Stirnkanten des Filtermediums durch eine Verklebung derart verschlossen sind, dass keine Aktivkohle herausrieseln kann. Der Filterbalg ist vollständig umlaufend von Rahmenelementen umgeben.

### Offenbarung der Erfindung

Vor diesem Hintergrund liegt der vorliegenden Erfindung die Aufgabe zugrunde, ein verbessertes Filterelement und Verfahren zum Herstellen eines solchen zu schaffen. Weiterhin ist eine Aufgabe der vorliegenden Erfindung, eine verbesserte Filteranordnung sowie ein verbessertes Verfahren zu schaffen.

Demgemäß wird ein Filterelement vorgeschlagen. Das Filterelement umfasst ein gefaltetes Filtermedium, aufweisend zumindest zwei Faserlagen und zumindest eine Adsorptionslage mit Aktivkohle, wobei die zumindest eine Adsorptionslage zwischen den zumindest zwei Faserlagen angeordnet ist, wobei das Filtermedium zumindest eine freie Kante aufweist, die mit Hilfe eines chemisch härtenden und/oder physikalisch abbindenden Klebstoffs versiegelt ist, um die Aktivkohle in einer Lagenebene einzuschließen.

Indem die zumindest eine freie Kante mit Hilfe eines härtenden und/oder physikalisch abbindenden Klebstoffs versiegelt wird, kann effektiv und einfach das Herausrieseln der Aktivkohle an der Kante unterbunden werden.

Die freie Kante ist vorzugsweise eine offene Schnittkante.

Unter "chemisch härtendem Klebstoff" wird vorliegend ein Klebstoff verstanden, der seine Klebewirkung erst durch eine chemische Reaktion entwickelt, so dass der Klebstoff vor und nach der chemischen Reaktion unterschiedliche chemische Zusammensetzungen aufweisen kann. Ein chemisch härtender Klebstoff kann auch als reaktiver Klebstoff bezeichnet werden. Geeignete chemisch härtende Klebstoffe sind beispielsweise chemisch härtende Ein-Komponenten-Klebstoffe. Hierbei handelt es sich um einen chemisch härtenden Klebstoff, bei welchem ein Härter und ein Binder bereits gemischt vorliegen und bei Lagerbedingungen gegen die Reaktion geschützt sind. Durch Zufuhr von beispielsweise Temperatur, Licht, Feuchtigkeit, Abkühlen, Entweichen des Lösungsmittels oder den Ausschluss von Luft wird dann die Aushärtereaktion ausgelöst. Der chemisch härtende Ein-Komponenten-Klebstoff muss somit nicht angemischt werden und kann beispielsweise direkt aus einem Gebinde aufgetragen werden. Beispielsweise ist ein Ein-Komponenten-Klebstoff, der insbesondere mit Wasser aus der Luft (Luftfeuchtigkeit) reagiert, ein wasservernetzender, chemisch härtender Klebstoff (im Folgenden auch als wasservernetzender Klebstoff bezeichnet). Als reaktiver Klebstoff können beispielsweise Polyurethanklebstoffsysteme verwendet werden, insbesondere Polyurethandispersionsklebstoffe, beispielsweise reaktive Polyurethanschmelzklebstoffe. Weitere geeignete Ein-Komponenten-Klebstoffe sind beispielsweise wasservernetzende Cyanacrylat-Klebstoffe.

Weitere geeignete chemisch härtende Klebstoffe sind Zwei-Komponenten-Klebstoffe, die im Ausgangszustand aus beispielsweise einem Binder und einem Härter bestehen und erst nach dem Vermischen von Binder und Härter erhärten. In einem Zwei-Komponenten-Klebstoff liegen die chemischen Reaktionskomponenten zunächst räumlich voneinander getrennt in zwei Gebinden vor und reagieren beim Zusammengeben miteinander. Geeignete Zwei-Komponenten-Klebstoffe sind beispielsweise Zwei-Komponenten-Polyurethan-Klebstoffe.

Durch den Einsatz eines chemisch härtenden Klebstoffs lässt sich die Fadenbildung gegenüber herkömmlichen Schmelzklebstoffen (thermoplastischen Schmelzklebstoffen) reduzieren. Weiterhin ist in der Regel das Aufschmelzen nicht möglich, und es liegt eine hohe Temperaturbeständigkeit, eine geringe Brennbarkeit und eine geringe Geruchsemission eines solchen chemisch reaktiven Klebstoffs vor. Ferner wird mit Hilfe des chemisch härtenden Klebstoffs insbesondere keine bloße Verpfropfung der freien Kante erwirkt. Der chemisch härtende Klebstoff wird vorzugsweise in die Adsorptionslage gesogen, so dass die Aktivkohle an einem Randbereich der offenen Kante fixiert wird. Hierdurch wird auf einfache Weise eine zuverlässige Versiegelung erreicht.

Unter "physikalisch abbindendem Klebstoff" wird vorliegend ein Klebstoff verstanden, der im Ausgangszustand in einem geschmolzenen oder gelösten Zustand vorliegt und nach dem Auftragen abkühlt oder durch Verdunstung eines Lösungsmittels abbindet. Vorzugsweise ist der physikalisch abbindende Klebstoff ein durch Wärme oder ein Lösungsmittel verflüssigtes Polymer. Geeignete physikalisch abbindende Klebstoffe können Ein-Komponenten-Klebstoffe sein, beispielsweise ein strahlenhärtbarer Klebstoff, insbesondere UV-härtender Klebstoff, der nach oder während einer gezielten Bestrahlung, beispielsweise mit Licht, insbesondere UV-Licht (ultraviolettes Licht), härtet. Geeignete strahlenhärtbare Klebstoffe sind beispielsweise Klebstoffe auf Epoxidharzbasis und Acrylatklebstoffe. Acrylatklebstoffe sind radikalisch vernetzende Mono- oder Prepolymere, beispielsweise Polymethylmethacrylat (PMMA). Als Initiator für UV-härtende Klebstoffe kann beispielsweise Dibenzoylperoxid eingesetzt werden.

In einer Ausführungsform ist der Klebstoff ein Mischklebstoff aus mindestens einem chemisch härtenden Klebstoff und mindestens einem physikalisch abbindenden Klebstoff.

In einer bevorzugten Ausführungsform ist der Klebstoff ein Mischklebstoff aus einem strahlenhärtbaren Klebstoff, insbesondere einem UV-härtenden Klebstoff, und einem chemisch härtenden, insbesondere wasservernetzenden Klebstoff. Hierdurch kann eine Verfahrensführung erreicht werden, die beispielsweise mittels UV-Belichtung eine schnelle erste Aushärtung und/oder Vernetzung erreicht, sodass die Filterelemente gut weiterverarbeitet werden können. Hierdurch kann vorteilhaft beispielsweise eine kurze Taktzeit erreicht werden. Eine nicht hinreichende Festigkeit oder ein bei solchen strahlenhärtbaren Klebstoffen eventuell auftretende Versprödung wird durch einen weiteren Klebstoff, der wasservernetzend ist vermieden. Der Mischklebstoff kann am weiterverarbeitbaren Filterelement, z.B. in seiner Verkaufsverpackung, durch den wasservernetzenden Klebstoff weiter aushärten und/oder vernetzen. Geeignete Mischklebstoffe können beispielsweise als den mindestens einen chemisch härtenden Klebstoff einen wasservernetzenden Polyurethan-Klebstoff und als den mindestens einen physikalisch abbindenden Klebstoff einen UV-härtenden Klebstoff, beispielsweise einen Acrylatklebstoff, beispielsweise PMMA, aufweisen. Gegenüber rein physikalisch vernetzenden Klebstoffen wie beispielsweise PMMA ist die Versprödung beim Einsatz des Mischklebstoffs zusätzlich reduziert.

Besonders bevorzugt sind die Faserlagen flächig mit der Adsorptionslage verbunden, insbesondere verklebt.

Unter einer "freien" Kante des Filtermediums ist eine solche Kante zu verstehen, welche nicht, insbesondere nicht durch ein Stabilisierungselement entsprechend nachstehender Definition, abgedeckt ist. Über die Seite der freien Kante können vorteilhaft an dem Filtergehäuse angeordnete Elemente wie Dorne oder dergleichen zwischen Falten des Filtermediums beispielsweise in Faltenlängsrichtung hineinreichen.

Unter "in einer Lagenebene einzuschließen" meint vorliegend ein Versperren des Wegs für die Aktivkohle in Richtung der freien Kante, um insbesondere ein Herausrieseln der Aktivkohle aus dem Filtermedium zu unterbinden.

Das Filterelement umfasst beispielsweise ein oder mehrere Stabilisierungselemente, insbesondere Seitenbänder und/oder Kopfbänder (auch als Stirnbänder bezeichnet), welche das Filtermedium zumindest abschnittsweise stabilisieren, um dessen Form, insbesondere im Filterbetrieb, aufrechtzuerhalten. Die Stabilisierungselemente können insbesondere einen geschlossenen oder offenen Rahmen - auch materialeinstückig - ausbilden, welcher das Filtermedium umgibt.

Die Stabilisierungselemente können mit dem Filtermedium randseitig stoffschlüssig verbunden, insbesondere verklebt sein. Dazu können die Stabilisierungselemente erhitzt und das Filtermedium in das erhitzte Material eingedrückt werden. Alternativ können die Stabilisierungselemente an das Filtermedium angespritzt sein. Die Stabilisierungselemente können selbst aus dem gleichen Material wie das Filtermedium hergestellt sein. Alternativ können die Stabilisierungselemente als Kunststoffspritzgussbauteile ausgebildet sein. Die Stabilisierungselemente können steif oder flexibel sein.

Das Filtermedium kann gefaltet oder wellenförmig ausgebildet sein. Als Faltungen sind beispielsweise Zickzack- oder W-Faltungen bekannt. Das Filtermedium kann geprägt und anschließend an Prägekanten unter Ausbildung von Faltkanten scharfkantig gefaltet sein. Als Ausgangsmaterial kann ein flächiger Materialfilterbogen dienen, welcher entsprechend umgeformt wird. Die Faserlage (eine oder alle der zumindest zwei Faserlagen) ist beispielsweise ein Filtergewebe, Filtergelege oder ein Filtervlies. Insbesondere kann die Faserlage in einem Spinnvlies- oder Meltblownverfahren hergestellt sein. Weiter kann die Faserlage verfilzt oder genadelt sein. Die Faserlage kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung orientiert sein.

Weiterhin kann das Filtermedium eine antimikrobielle und/oder antiallergene Wirkung aufweisen. Als antimikrobieller Stoff kommt beispielsweise Zink-Pyrithion oder Nanosilber, als antiallergener Stoff beispielsweise Polyphenol, in Betracht.

Ein entsprechendes Filterelement dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Beispielsweise kann eine Klimaanlage das Filterelement aufweisen.

Ein insbesondere offenes Filtermedium kann dazu eingerichtet sein, Partikel des Teststaubs A4 nach ISO 12103-1 aus einem Luftstrom mit einer Filtrationsgeschwindigkeit von 0,10 bis 0,30 m/s, bezogen auf die Filtermedienfläche, bei einer Luftdurchlässigkeit von größer 3000 l/m²s (bestimmt gemäß ISO 9237 bei 200 Pa) zu entfernen. Die Ermittlung der Filtrationskennwerte kann beispielsweise gemäß DIN 71460-1 erfolgen.

Ein insbesondere hochabscheidendes Filtermedium kann dazu eingerichtet sein, Partikel des Teststaubs A2 nach ISO 12103-1 sowie NaCI-Aerosolpartikel gemäß DIN 71460-1 aus einem Luftstrom mit einer Filtrationsgeschwindigkeit von 0,10 bis 0,30 m/s, bezogen auf die Filtermedienfläche, bei einer Luftdurchlässigkeit von größer 600 l/m²s (bestimmt gemäß ISO 9237 bei 200 Pa) zu entfernen. Die Ermittlung der Filtrationskennwerte kann beispielsweise gemäß DIN 71460-1 erfolgen.

Das Filterelement kann eine Dichtung aufweisen, welche eine dem Filterelement zugeordnete Rohseite gegenüber einer Reinseite desselben abdichtet. Die Dichtung kann bauteilidentisch mit ein oder mehreren Stabilisierungselementen des Filterelements ausgeführt sein. Alternativ kann die Dichtung als Zusatzbauteil ausgebildet sein. So kann die Dichtung beispielsweise an dem Filtermedium, den ein oder mehreren Stabilisierungselementen, dem Filterelement oder einer Filteraufnahme angebracht sein.

Das Filterelement kann in der Filteraufnahme austauschbar fixiert sein.

Das Filterelement bzw. die Filteranordnung kann in Personenkraftwagen, Lastkraftwagen, Baumaschinen, Wasserfahrzeugen, Schienenfahrzeugen, Luftfahrzeugen sowie allgemein in der Klimatechnik, insbesondere in Heiz-Klimageräten, in Haushaltsgeräten, in Brennstoffzellen oder in der Gebäudetechnik Anwendung finden. Diese Kraftwagen oder Fahrzeuge können elektrisch und/oder mittels Kraftstoff (insbesondere Benzin oder Diesel) betrieben werden. Im Hinblick auf die Gebäudetechnik kommen insbesondere stationäre Anlagen zur Behandlung von Luft in Betracht.

In Ausführungsformen verbindet der Klebstoff für das Einschließen der Aktivkohle in der Lagenebene die zumindest zwei Faserlagen an der freien Kante miteinander senkrecht zur Lagenebene.

Dies hat den Vorteil, dass der Klebstoff sich über die volle Breite eines Spalts zwischen den Faserlagen (in dem die zumindest eine Adsorptionslage angeordnet ist) erstreckt, so dass eine zuverlässige Versiegelung des Spalts gewährleistet werden kann.

In Ausführungsformen weist der Klebstoff einen chemisch härtenden und/oder einen physikalisch abbindenden Klebstoff, insbesondere einen chemisch härtenden und/oder einen physikalisch abbindenden Ein-Komponenten-Klebstoff auf.

Der Ein-Komponenten-Klebstoff hat den Nachteil, dass meist keine sehr schnelle Verklebung möglich ist, falls ein Klebstoff verwendet wird, der beispielsweise mit Wasser, insbesondere Luftfeuchtigkeit, reagiert. Jedoch wird eine gute Vernetzung über die Zeit erreicht und gute Ergebnisse hinsichtlich der elastischen Eigenschaften des Klebstoffs. Die Verwendung eines strahlenhärtbaren Klebstoffs hat den Vorteil, dass die Klebewirkung gezielt, insbesondere durch UV-Strahlen, eingeleitet werden kann und in der Regel zumindest an der Oberfläche sehr schnell erfolgt. Manchmal wird hier jedoch die gewünschte Elastizität nicht erreicht oder es besteht eine Tendenz des Materials zu verspröden.

Durch eine Mischung (Mischklebstoff) von mindestens einem chemisch härtenden Klebstoff, insbesondere einem wasservernetzenden Klebstoff mit mindestens einem physikalisch abbindenden Klebstoff, insbesondere strahlenhärtbaren, insbesondere UV-härtenden, Klebstoff kann man die Vorteile kombinieren und dennoch eine schnelle Verfahrensführung erreichen, indem man zunächst beispielsweise UV belichtet und zudem die Reaktion des Wasservernetzens ausnutzt, die in der Regel länger dauert als die Reaktion des strahlenhärtbaren Klebstoffs. Der Mischklebstoff hat den Vorteil, dass bei hoher mechanischer Stabilität gleichzeitig eine Elastizität und damit Flexibilität gegeben ist, die vorteilhaft für die Lebensdauer des Filtermediums ist.

In Ausführungsformen weist der Klebstoff einen Zwei-Komponenten-Klebstoff auf.

Der Zwei-Komponenten-Klebstoff hat den Vorteil, dass die Klebewirkung gezielt eingeleitet werden kann, indem die beiden Komponenten vor der Auftragung miteinander vermischt werden, so dass ein zügiges Erhärten des Klebstoffs erfolgt.

In Ausführungsformen weist der chemisch reaktive und/oder physikalisch abbindende Klebstoff ein Lösungsmittel auf. Geeignete Lösungsmittel sind beispielsweise Alkohole, Ester, beispielsweise Ethylacetat, Ketone, beispielsweise 2-Butanon,. Lösungsmittel im Sinne der Erfindung ist auch Wasser. Geeignete wasserbasierte physikalisch abbindende Klebstoffe sind beispielsweise Klebstoffe auf Basis tierischer Proteine, beispielsweise auf Basis von Glutin oder Casein, Klebstoffe auf pflanzlicher Basis, beispielsweise auf Basis von Stärke oder Zellulose sowie Klebstoffe auf synthetischer Basis, zum Beispiel Polyvinylalkohol (PVOH).

Dabei ist zumindest ein Teil des Klebstoffs ein physikalisch abbindender Klebstoff der in dem Lösungsmittel gelöst oder verflüssigt ist.

In Ausführungsformen härtet/bindet der Klebstoff mit Hilfe von Licht und/oder Wärme aus und/oder ab.

Beispielsweise ist das Licht ein ultraviolettes Licht. Vorzugsweise werden zum Beschleunigen einer Verdampfung des Lösungsmittels ein Heizstrahler und/oder ein Luftgebläse verwendet, so dass eine Taktzeit bei einer Fertigung des Filterelements reduziert werden kann.

In Ausführungsformen bildet die freie Kante des Filtermediums eine freie Faltenstirnkante aus.

Das Versiegeln der freien Faltenstirnkante nach dem Faltvorgang hat den Vorteil, dass der Klebstoff bzw. die Klebstoffschicht nach dem Erhärten oder Abbinden nicht mehr umgeformt wird, so dass eine Beschädigung der Versiegelung vermieden wird.

Das Filterelement weist ferner einen offenen Rahmen auf, welcher das Filtermedium derart umschließt, dass die frei Faltenstirnkante in einem offenen Bereich desselben angeordnet ist.

Vorteilhaft ist, dass somit trotz des offenen Bereichs eine ausreichende Stabilität gewährleistet werden kann.

Weiterhin wird eine Filteranordnung mit einem Filterelement, wie vorstehend beschrieben, und einem Filtergehäuse, in welchem das Filterelement aufgenommen ist, vorgeschlagen, wobei die zumindest eine freie Kante gegen eine Wandung des Filtergehäuses abdichtet.

Vorzugsweise liegt der ausgehärtete oder abgebundene Klebstoff unmittelbar an der Wandung an, so dass insbesondere eine äußere Klebstoffoberfläche als Dichtfläche ausgebildet ist, die gegen die Wandung des Gehäuses abdichtet.

Das Filtergehäuse kann ein oder mehrere Elemente wie Dornen oder dergleichen aufweisen, welche über die Seite der freien Kante zwischen Falten des Filtermediums insbesondere in Faltenlängsrichtung hineinragen.

Weiterhin wird ein Verfahren zum Herstellen eines Filterelements, mit den folgenden Schritten vorgeschlagen:
Bereitstellen eines Filtermediums mit zumindest zwei Faserlagen und zumindest einer Adsorptionslage mit Aktivkohle, die zwischen den zumindest zwei Faserlagen angeordnet ist, wobei das Filtermedium zumindest eine freie Kante aufweist,
Falten des Filtermediums, und
Auftragen eines Klebstoffs auf die zumindest eine freie Kante des Filtermediums, um die Aktivkohle in einer Lagenebene einzuschließen.

Das Auftragen des Klebstoffs kann beispielsweise mit Hilfe eines Sprühvorgangs und/ oder eines Tauchbads erfolgen. Alternativ kann das Auftragen mit Hilfe von Walzen oder Pinseln erfolgen. Dabei kann das Auftragen des Klebstoffs von einer Seite oder von oben erfolgen.

Es wird ein offener Rahmen bereitgestellt. Weiter bevorzugt wird das Filtermedium, insbesondere nach dem Faltvorgang, mit dem offenen Rahmen umschlossen und/oder verbunden. Der offene Rahmen umfasst ein Seitenband und zwei Kopfbänder, die derart miteinander verbunden sind, dass sie eine U-Form ausbilden, so dass gegenüber dem Seitenband ein offener Bereich vorliegt.

In Ausführungsformen erfolgt das Auftragen des Klebstoffs auf die zumindest eine freie Kante des Filtermediums nach dem Falten des Filtermediums.

In Ausführungsformen weist der Klebstoff einen chemisch härtenden und/oder einen physikalisch abbindenden Klebstoff, insbesondere einen chemisch härtenden und/oder einen physikalisch abbindenden Ein-Komponenten-Klebstoff auf. In Ausführungsformen weist der Klebstoff einen chemisch härtenden Zwei-Komponenten-Klebstoff auf.

In Ausführungsformen weist der Klebstoff einen Zwei-Komponenten-Klebstoff auf, wobei zuerst eine erste Komponente des Zwei-Komponenten-Klebstoffsund anschließend eine zweite Komponente des Zwei-Komponenten-Klebstoffs auf die zumindest eine freie Kante des Filtermediums aufgetragen wird. Die beiden Komponenten des Zwei-Komponenten-Klebstoffs können auch unmittelbar vor dem Auftrag miteinander gemischt werden.

In Ausführungsformen wird nach dem Auftragen des Klebstoffs auf die zumindest eine freie Kante der Klebstoff mit Licht und/oder Wärme beaufschlagt.

In Ausführungsformen wird eine Verpackung für das Filterelement bereitgestellt und nach dem Auftragen des Klebstoffs auf die zumindest eine freie Kante des Filtermediums das Filterelement mit Hilfe der Verpackung verpackt, so dass ein Teil eines Abbindevorgangs und/oder Aushärtevorgangs des Klebstoffs innerhalb der Verpackung erfolgt.

Dies hat den Vorteil, dass eine Taktzeit in dem Fertigungsprozess reduziert werden kann.

Es ist auch erfindungsgemäß denkbar, zwei Schichten desselben Klebstoffs mit unterschiedlichen Viskositäten aufzutragen. Die erste Schicht ist dabei dünnflüssig, um so durch die Kapillarwirkung der Fasern des Filtermediums eine Tiefenwirkung zu erzielen; die zweite Schicht ist dickflüssiger im Vergleich zur ersten Schicht und versiegelt die Kante direkt an der Schnittstelle. Hierdurch wird vorteilhaft eine zuverlässige Versiegelung erreicht.

Die für das Filterelement beschriebenen Ausführungsformen und Merkmale gelten für die Filteranordnung, sowie das Verfahren entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine schematische Darstellung eines allgemeinen Kraftfahrzeugs mit einer Filteranordnung;
Fig. 2 eine perspektivische Darstellung der Filteranordnung aus Fig. 1, umfassend ein Filtergehäuse mit einem darin aufgenommenem Innenraumfilter;
Fig. 3 eine perspektivische Darstellung des Innenraumfilters aus Fig. 2, umfassend einen offenen Rahmen und ein Filtermedium;
Fig. 4 eine perspektivische Darstellung des Filtermediums aus Fig. 3;
Fig. 5A bis 5C einen Schnitt V-V durch das Filtermedium aus Fig. 4;
Fig. 6 einen Schnitt VI-VI durch die Filteranordnung aus Fig. 2; und
Fig. 7 eine perspektivische Darstellung einer weiteren Ausführungsform eines Innenraumfilters.

In den Figuren sind gleiche oder funktionsgleiche Elemente, sofern nichts anderes angegeben ist, mit denselben Bezugszeichen versehen worden.

### Ausführungsform(en) der Erfindung

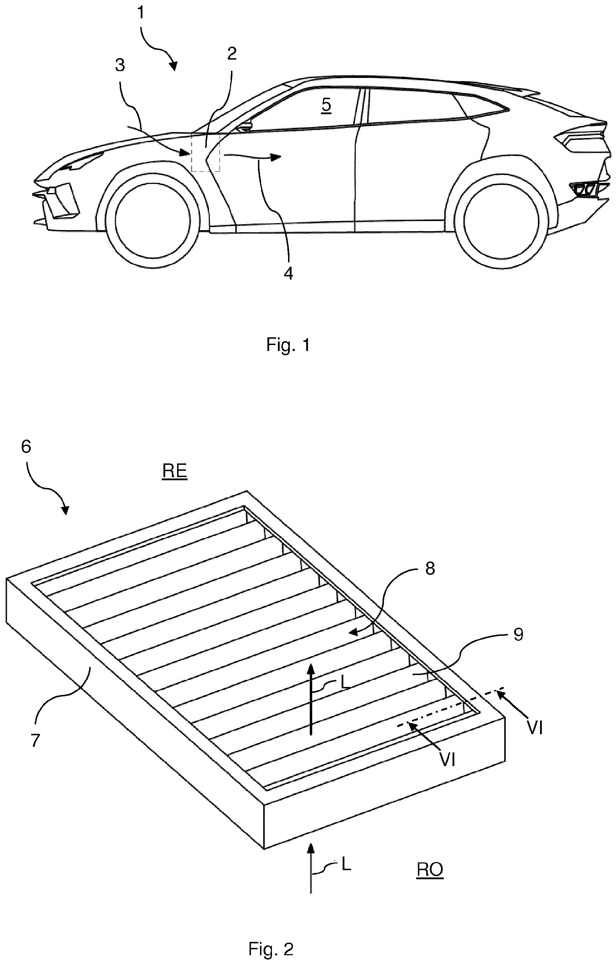

Fig. 1 zeigt ein Kraftfahrzeug 1 mit einer Klimaanlage 2, welche als Heiz-Klimaanlage ausgebildet sein kann. Die Klimaanlage 2 nimmt Außenluft 3 auf und führt gefilterte Luft 4 einer Kabine 5 (auch als Fahrgastraum bezeichnet) des Kraftfahrzeugs 1 zu. Zu diesem Zweck umfasst die Klimaanlage 2 eine in Fig. 2 gezeigte Filteranordnung 6.

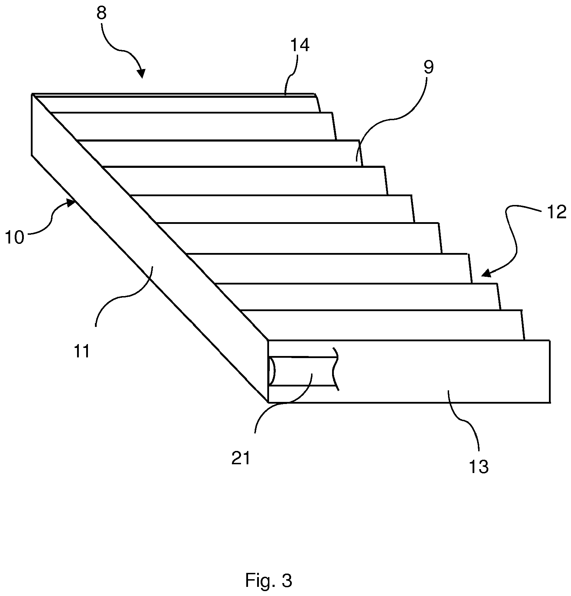

Die Filteranordnung 6 umfasst ein Filtergehäuse 7 mit einem darin insbesondere austauschbar aufgenommenen Innenraumfilter 8. Der Innenraumfilter 8 ist in Fig. 3 näher gezeigt. Der Innenraumfilter 8 weist ein Filtermedium 9 auf, welches mit einem offenen Rahmen 10 verbunden ist. Der Rahmen 10 kann beispielsweise ein Seitenband 11, einen - insbesondere gegenüber dem Seitenband 11 angeordneten - offenen Bereich 12 und Kopfbänder 13, 14 umfassen.

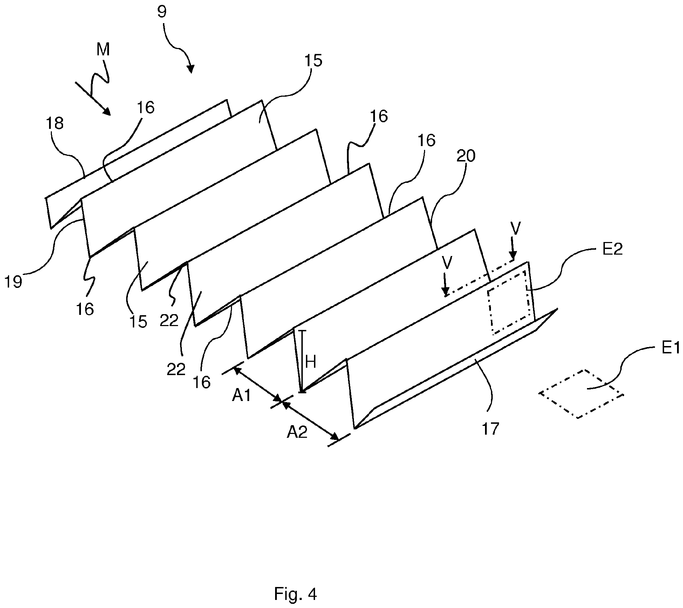

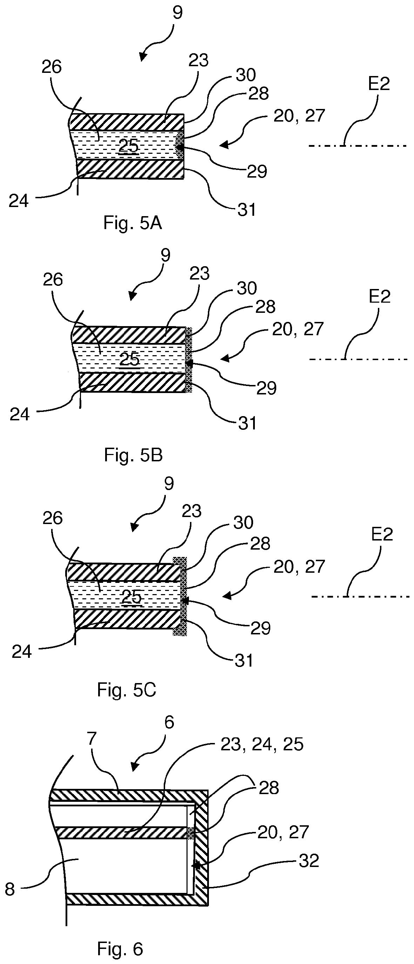

Das Filtermedium 9 ist in Fig. 4 isoliert gezeigt. Das Filtermedium 9 ist mehrlagig ausgebildet. Das Filtermedium 9 weist beispielsweise eine oder mehrere Lagen (siehe insbesondere die Faserlagen 23, 24 in den Fig. 5A bis 5C) aus Filtervlies, Filtergewebe, Filtergelege oder Filterfilz, insbesondere ein Nadelfilz, auf. Insbesondere kann eine solche Lage in einem Meltblown-Verfahren hergestellt sein. Die Lage kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/ oder quer zur Maschinenrichtung M orientiert sein. Auch können die Fasern in einer Raumrichtung gestreckt sein.

Das Filtermedium 9 kann Falten 15 aufweisen, welche sich typischerweise quer zur Maschinenrichtung M erstrecken. Das gefaltete Filtermedium 9 kann auch als Plissee bezeichnet werden. Die Falten 15 können mittels Faltens entlang scharfer Faltkanten 16 (auch als Faltenspitzen bezeichnet) oder durch eine wellenförmige Ausführung des Filtermediums 9 erzeugt werden. Eine jeweilige Falte 15 kann durch zwei Faltabschnitte 22 definiert sein, welche über eine entsprechende Faltkante 16 miteinander verbunden sind. Gemäß dem Ausführungsbeispiel weisen die Faltkanten 16 in bzw. entgegen der Anströmrichtung, welche in Fig. 2 durch den Pfeil L kenntlich gemacht ist. Die Faltung kann insbesondere als Zickzackfaltung ausgeführt sein.

Auch eine Faltung, bei welcher die Falten 15 eine variierende Höhe H aufweisen, ist möglich. Ferner kann der Faltenabstand zwischen den Falten 15 variieren, so dass eine Distanz A1 ungleich einer Distanz A2 ist. Das Filtermedium 9 kann selbsttragend ausgeführt sein, d.h. die Falten 15 sind bei einer bestimmungsgemäßen Durchströmung im Filterbetrieb formstabil.

Das Filtermedium 9 wird in Maschinenrichtung M von Endfalten 17, 18 begrenzt. Quer dazu wird das Filtermedium 9 von Faltenstirnkanten 19, 20 (auch als Faltenprofile bezeichnet) begrenzt. Mit "Faltenstirnkante" ist die stirnseitige Faltenfläche gemeint, welche sich zwischen benachbarten Faltkanten 16 einer jeweiligen Falte 15 erstreckt.

Das Filtermedium 9 kann in der Draufsicht, also in der Ebene E1 seiner flächigen Erstreckung, eine rechteckige Gestalt aufweisen. Allerdings ist auch eine dreieckige, fünf- oder mehreckige, runde oder ovale Gestalt denkbar.

Das in Fig. 3 gezeigte Seitenband 11 ist mit einer Faltenstirnkante 19, 20, und die Kopfbänder 13, 14 sind mit den Endfalten 17, 18 verbunden, insbesondere durch Verschmelzen, Verschweißen oder Verkleben. Das Seitenband 11 sowie die Kopfbänder 13, 14 können den offenen Rahmen 10 einstückig oder mehrteilig ausbilden. Das Seitenband 11 sowie die Kopfbänder 13, 14 können beispielsweise aus einem insbesondere flexiblen Fasermaterial oder als insbesondere steife Kunststoffspritzgussbauteile hergestellt sein. Insbesondere kann der offene Rahmen 10 durch Anspritzen an das Filtermedium 9 erzeugt sein.

Das Filtermedium 9 kann als Partikelfilter fungieren und dabei Partikel, insbesondere Staub, Schwebstoffe oder Flüssigkeitstropfen, aus der Ansaugluft 3 herausfiltern. Zusätzlich kann das Filtermedium 9 als Geruchsfilter fungieren. Hierzu ist eine Schicht mit Aktivkohle vorgesehen. Das Filtermedium 9 kann ganz allgemein dazu eingerichtet sein, bestimmte feste, flüssige und/oder gasförmige Stoffe zu ab- oder adsorbieren.

Im Filterbetrieb wird das Filtermedium 9, wie in Fig. 2 gezeigt, senkrecht zu seiner flächigen Erstreckung von Luft L durchströmt. Die Luft L strömt dabei von einer Rohseite RO des Innenraumfilters 8 hin zu einer Reinseite RE desselben.

Um eine ausreichende Abdichtung zwischen der Roh- und Reinseite RO, RE zu gewährleisten, kann eine Dichtung zwischen dem Innenraumfilter 8 und dem Filtergehäuse 7 vorgesehen sein. Die Dichtung kann beispielsweise in den offenen Rahmen 10 integriert sein. In diesem Fall ist der offene Rahmen 10 zumindest teilweise aus einem dichtenden Material ausgebildet. Alternativ kann die Dichtung als Zusatzteil vorgesehen, beispielsweise an dem offenen Rahmen 10 befestigt, insbesondere angespritzt, sein. Eine solche Dichtung 21 ist beispielhaft und ausschnittsweise in Fig. 3 dargestellt.

Fig. 5A bis 5C zeigen jeweils in einem Schnitt V-V aus Fig. 4 unterschiedliche Varianten des Filtermediums 9.

Fig. 5A zeigt ein Filtermedium 9 mit zwei Faserlagen 23, 24 und einer Adsorptionslage 25 mit Aktivkohle 26, die zwischen den zwei Faserlagen 23, 24 angeordnet ist, wobei das Filtermedium 9 zumindest eine freie Kante 27 aufweist, die mit Hilfe eines chemisch härtenden und/oder physikalisch abbindenden Klebstoffs 28 versiegelt ist, um die Aktivkohle 26 in der Lagenebene E2 einzuschließen. Die freie Kante 27 entspricht hier einer Faltenstirnkante 20. In anderen Ausführungsformen könnte es sich auch um eine der Endkanten der Endfalten 17, 18 handeln. Die Adsorptionslage 25 ist flächig mit den zwei Faserlagen 23, 24 verbunden, wobei diese Verbindung eine Klebeverbindung sein kann.

Der Klebstoff 28 bedeckt lediglich eine Stirnkante 29 der Adsorptionsschicht 25, wobei insbesondere Stirnkanten 30, 31 der Faserlagen 23, 24 von dem Klebstoff 28 nicht bedeckt sind. Für das Einschließen der Aktivkohle 26 in der Lagenebene E2 werden die beiden Faserlagen 23, 24 an der freien Kante 27 miteinander senkrecht zur Lagenebene E2 verbunden.

Fig. 5B zeigt im Unterschied zur Fig. 5A eine Versiegelung der freien Kante 27, wobei die Stirnkanten 29, 30, 31 der Adsorptionslage 25 und der Faserlagen 23, 24 von dem Klebstoff 28 bedeckt sind.

Fig. 5C zeigt im Unterschied zur Fig. 5B eine Versiegelung der freien Kante 27, wobei der Klebstoff 28 die freie Kante 27 im Querschnitt betrachtet U-förmig einschließt. Vorzugsweise ist die freie Kante 27 U-förmig mit Klebstoff 28 umspritzt oder umgossen.

Der Klebstoff 28 kann bei allen beschriebenen Ausführungsformen ein reaktiver oder chemisch härtender Ein-Komponenten-Klebstoff sein, der nach dem Auftragen auf die freie Kante 27 mit Hilfe eines physikalischen Impulses, wie beispielsweise einem Lichteintrag, insbesondere UV-Lichteintrag, und/oder einem Wärmeeintrag, aushärtet. Alternativ kann der Klebstoff 28 ein reaktiver oder chemisch härtender Zwei-Komponenten-Klebstoff sein, wobei beispielsweise eine Komponente ein Binder und eine andere Komponente ein Härter ist. Dabei kann zuerst der Binder und anschließend der Härter oder umgekehrt auf die freie Kante 27 aufgetragen werden, so dass mittels einer Vermischung von Härter und Binder das Erhärten des Klebstoffs bewirkt wird.

In einem anderen alternativen Aufführungsbeispiel kann der Klebstoff 28 ein Mischklebstoff aus chemisch härtendem und physikalisch abbindendem Klebstoff sein. Der chemisch härtende Klebstoff kann dabei ein strahlenhärtbarer Klebstoff sein und der physikalisch abbindende Klebstoff ein mit Hilfe von Wärme und/oder einem Lösungsmittel verflüssigtes Polymer sein. Beispielsweise kann zuerst der Mischklebstoff auf die freie Kante 27 aufgetragen werden. Nach dem Auftrag kann der Mischklebstoff mit Hilfe von Licht, insbesondere UV-Licht, bestrahlt werden, so dass der chemisch härtende Teil des Mischklebstoffs schnell erhärten und ein Verpacken des Filterelements 8 erfolgen kann, bevor ein vollständiges Abbinden des physikalisch abbindenden Teils des Mischklebstoffs erfolgt. Da ein Teil des Abbindevorgangs in der Verpackung erfolgt, wird eine Taktzeit bei der Herstellung des Filterelements 8 verringert und eine hohe mechanische Stabilität bei hoher Flexibilität gewährleistet, da der Klebstoff 28 nicht versprödet.

Fig. 6 zeigt den Schnitt VI-VI durch die Filteranordnung 6 aus Fig. 2. Die Filteranordnung 6 umfasst das Filterelement 8 und das Filtergehäuse 7, in welchem das Filterelement 8 aufgenommen ist, wobei insbesondere die zumindest eine freie Kante 27 gegen eine Wandung 32 des Filtergehäuses 7 abdichtet. Der Klebstoff 28 kann unmittelbar auf der Wandung 32 aufliegen und somit eine Dichtfläche mit der Wandung 32 ausbilden. Die Wandung 32 kann auch eine Dichtung 21 umfassen, so dass der Klebstoff entsprechend gegen eine Dichtung 21 abdichtet. Die Dichtung 21 kann auch an dem Filterelement, insbesondere dem Innenraumfilter 8, vorgesehen sein.

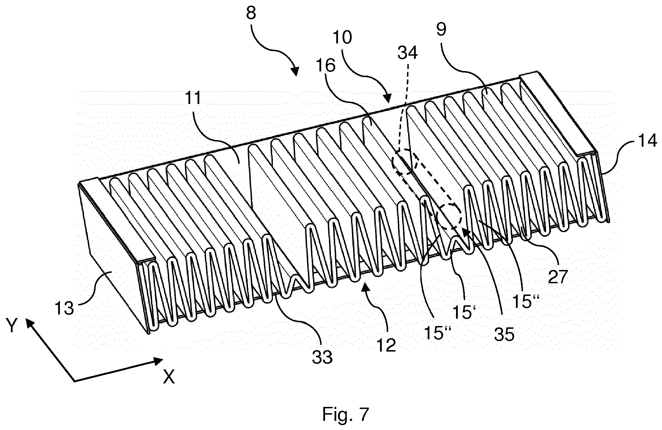

Bei dem Ausführungsbeispiel gemäß Fig. 7 weist das gefaltete Filtermedium 9 eine derartige Faltung auf, dass eine einhüllende Mantelfläche desselben als Quaderoberfläche ausgebildet ist. Weiterhin umschließt der offene Rahmen 10 das Filtermedium 9 derart, dass die freie Faltenstirnkante 27 in einem offenen Bereich 12 des offenen Rahmens 10 angeordnet ist. Der offene Rahmen 10 weist zwei Kopfbänder 13, 14 mit einer L-förmigen Querschnittsgeometrie auf, die sich in eine Querrichtung Y erstrecken und mittels des Seitenbands 11, welches sich in eine Längsrichtung X erstreckt, verbunden sind. Weiterhin stabilisiert eine Leiste 33, die sich in Längsrichtung X erstreckt und die Kopfbänder 13, 14 zusätzlich miteinander verbindet, das Filterelement 8.

An dem Filtergehäuse 7 kann ein Dorn 34 angeordnet sein. Dieser erstreckt sich in einem in dem Filtergehäuse 7 montierten Zustand des Filterelements 9 in einem Faltenzwischenraum 35 parallel zu den Faltkanten 16. Der Faltenzwischenraum 35 kann durch Ausbilden einer Falte 15' mit einer geringeren Höhe als die unmittelbar benachbarten Falten 15" erzeugt sein.

Hierbei kann das Filterelement 8, insbesondere der Innenraumfilter, mittels eines Verfahrens hergestellt werden, das nachfolgend beschrieben wird:
Zunächst wird das Filtermedium 9 mit den zumindest zwei Faserlagen 23, 24 und zumindest der Adsorptionslage 25 mit Aktivkohle 26, die zwischen den zumindest zwei Faserlagen 23, 24 angeordnet ist, gefertigt.

Anschließend wird das Filtermedium 9 gefaltet. Danach kann das Filtermedium 9 mit dem offenen Rahmen 10 umschlossen werden, so dass dieser das Filtermedium 9 stabilisiert.

In einem weiteren Schritt wird der Klebstoff 28 auf die zumindest eine freie Kante 27 des Filtermediums 9 aufgetragen, um die Aktivkohle 26 in der Lagenebene E einzuschließen.

Schließlich wird der Innenraumfilter 8 mit Hilfe von Verpackungsmaterial verpackt.

Die Reihenfolge der Verfahrensschritte erfolgt vorzugsweise in der aufgezählten Reihenfolge. Das Auftragen des Klebstoffs 28 kann beispielsweise mit Hilfe eines Sprühvorgangs und/oder eines Tauchbads erfolgen. Alternativ kann das Auftragen mit Hilfe von Walzen oder Pinseln erfolgen. Dabei kann das Auftragen des Klebstoffs 28 von einer Seite oder von oben erfolgen.

Obwohl die vorliegende Erfindung anhand bevorzugter Ausführungsbeispiele näher erläutert wurde, ist sie nicht darauf beschränkt, sondern vielfältig modifizierbar. "Ein" schließt vorliegend keine Vielzahl aus.

### Bezugszeichen

- 1: Kraftfahrzeug
- 2: Klimaanlage
- 3: Außenluft, Ansaugluft
- 4: gefilterte Luft
- 5: Kabine
- 6: Filteranordnung
- 7: Filtergehäuse
- 8: Filterelement, Innenraumfilter
- 9: Filtermedium
- 10: offener Rahmen
- 11: Seitenband
- 12: offener Bereich
- 13, 14: Kopfband
- 15, 15', 15": Falten
- 16: Faltenkante
- 17, 18: Endfalten
- 19, 20: Faltenstirnkante
- 21: Dichtung
- 22: Faltabschnitte
- 23, 24: Faserlage
- 25: Adsorptionslage
- 26: Aktivkohle
- 27: freie Kante
- 28: Klebstoff
- 29, 30, 31: Stirnkante
- 32: Wandung
- 33: Leiste
- 34: Dorn
- 35: Faltenzwischenraum
- M: Maschinenrichtung
- H: Höhe
- L: Luft
- X: Längsrichtung
- Y: Querrichtung
- A1, A2: Distanz
- E1: Ebene
- E2: Lagenebene
- RE: Reinseite
- RO: Rohseite

## Patentansprüche

1. Filterelement (8) mit einem gefalteten Filtermedium (9), aufweisend zumindest zwei Faserlagen (23, 24) und zumindest eine Adsorptionslage (25) mit Aktivkohle (26), wobei die zumindest eine Adsorptionslage (25) zwischen den zumindest zwei Faserlagen (23, 24) angeordnet ist, wobei das Filtermedium (9) zumindest eine freie Kante (27) aufweist, die mit Hilfe eines chemisch härtenden und/oder physikalisch abbindenden Klebstoffs (28) versiegelt ist, um die Aktivkohle (26) in einer Lagenebene (E2) einzuschließen, wobei die freie Kante (27) des Filtermediums (9) eine freie Faltenstirnkante (19, 20) ausbildet, und wobei das Filterelement (8) ferner einen offenen Rahmen (10) aufweist, welcher das Filtermedium (9) derart umschließt, dass die freie Faltenstirnkante (19, 20) in einem offenen Bereich (12) desselben angeordnet ist, und wobei der offene Rahmen (10) ein Seitenband (11) und zwei Kopfbänder (13,14) aufweist, die derart miteinander verbunden sind, dass sie eine U-Form ausbilden, so dass gegenüber dem Seitenband der offene Bereich (12) vorliegt.

2. Filterelement nach Anspruch 1, wobei der Klebstoff (28) für das Einschließen der Aktivkohle (26) in der Lagenebene (E2) die zumindest zwei Faserlagen (23, 24) an der freien Kante (27) miteinander senkrecht zur Lagenebene (E2) verbindet.

3. Filterelement nach Anspruch 1 oder 2, wobei der Klebstoff (28) einen chemisch härtenden oder einen physikalisch abbindenden Ein-Komponenten-Klebstoff aufweist.

4. Filterelement nach einem der Ansprüche 1 oder 3, wobei der Klebstoff (28) einen Zwei-Komponenten-Klebstoff aufweist.

5. Filterelement nach einem der Ansprüche 1 bis 4, wobei der Klebstoff (28) ein Mischklebstoff ist, wobei der Mischklebstoff mindestens einen chemisch härtenden Klebstoff und mindestens einen physikalisch abbindenden Klebstoff umfasst.

6. Filterelement nach Anspruch 5, wobei der Mischklebstoff mindestens einen wasservernetzenden chemisch härtenden Klebstoff und mindestens einen strahlenhärtbaren Klebstoff umfasst.

7. Filterelement nach einem der Ansprüche 1 bis 6, wobei der Klebstoff (28) mit Hilfe von Licht und/oder Wärme aushärtet und/oder abbindet.

8. Filteranordnung (6) mit einem Filterelement (8) nach einem der Ansprüche 1 bis 7 und einem Filtergehäuse (7), in welchem das Filterelement (8) aufgenommen ist, wobei die zumindest eine freie Kante (27) gegen eine Wandung (32) des Filtergehäuses (7) abdichtet.

9. Verfahren zum Herstellen eines Filterelements (8), mit den folgenden Schritten:
Bereitstellen eines Filtermediums (9) mit zumindest zwei Faserlagen (23, 24) und zumindest einer Adsorptionslage (25) mit Aktivkohle (26), wobei die zumindest eine Adsorptionslage (25) zwischen den zumindest zwei Faserlagen (23, 24) angeordnet ist, wobei das Filtermedium (9) zumindest eine freie Kante (27) aufweist,
Falten des Filtermediums (9), und
Auftragen eines Klebstoffs (28) auf die zumindest eine freie Kante (27) des Filtermediums (9), um die Aktivkohle (26) in einer Lagenebene (E2) einzuschließen, wobei die freie Kante (27) des Filtermediums (9) eine freie Faltenstirnkante (19, 20) ausbildet,
danach Umschließen des Filtermediums (9) mit einem offenen Rahmen (10), so dass dieser das Filtermedium (9) stabilisiert, derart, dass die freie Faltenstirnkante (19, 20) in einem offenen Bereich (12) desselben angeordnet ist,
wobei der offene Rahmen (10) ein Seitenband (11) und zwei Kopfbänder (13, 14) aufweist, die derart miteinander verbunden sind, dass sie eine U-Form ausbilden, so dass gegenüber dem Seitenband der offene Bereich (12) vorliegt.

10. Verfahren nach Anspruch 9, wobei das Auftragen des Klebstoffs (28) auf die zumindest eine freie Kante (27) des Filtermediums (9) nach dem Falten des Filtermediums (9) erfolgt.

11. Verfahren nach Anspruch 9 oder 10, wobei der Klebstoff (28) einen chemisch härtenden und/oder einen physikalisch härtenden Klebstoff, insbesondere einen chemisch härtenden und/oder einen physikalisch härtenden Ein-Komponenten-Klebstoff aufweist.

12. Verfahren nach einem der Ansprüche 9 bis 11, wobei der Klebstoff (28) einen Zwei-Komponenten-Klebstoff aufweist.

13. Verfahren nach einem der Ansprüche 9 bis 12, wobei der Klebstoff (28) einen Zwei-Komponenten-Klebstoff aufweist und zuerst eine erste Komponente des Zwei-Komponenten-Klebstoffs und anschließend eine zweite Komponente des Zwei-Komponenten-Klebstoffs auf die zumindest eine freie Kante (27) des Filtermediums (9) aufgetragen wird.

14. Verfahren nach einem der Ansprüche 9 bis 13, wobei nach dem Auftragen des Klebstoffs (28) auf die zumindest eine freie Kante (27) der Klebstoff (28) mit Licht und/oder Wärme beaufschlagt wird.

15. Verfahren nach einem der Ansprüche 9 bis 14, wobei eine Verpackung für das Filterelement (8) bereitgestellt wird und nach dem Auftragen des Klebstoffs (28) auf die zumindest eine freie Kante (27) des Filtermediums (9) das Filterelement (8) mit Hilfe der Verpackung verpackt wird, so dass ein Teil eines Abbindevorgangs und/ oder Aushärtevorgangs des Klebstoffs (28) innerhalb der Verpackung erfolgt.

## Claims

1. Filter element (8) having a folded filter medium (9), featuring at least two fibrous layers (23, 24) and at least one adsorption layer (25) with activated carbon (26), wherein the at least one adsorption layer (25) is disposed between the at least two fibrous layers (23, 24), wherein the filter medium (9) features at least one free edge (27) which is sealed using a chemically curing and/or physically setting adhesive (28) to enclose the activated carbon (26) in a layer plane (E2), wherein the free edge (27) of the filter medium (9) forms a free fold front edge (19, 20), and wherein the filter element (8) furthermore features an open frame (10) which encloses the filter medium (9) in such a way that the free fold front edge (19, 20) is disposed in an open area (12) thereof, and wherein the open frame (10) features a sideband (11) and two lateral strips (13, 14) which are connected to one another in such a way that they form a U-shape so that the open area (12) is opposite the sideband.

2. Filter element according to claim 1, wherein the adhesive (28), for enclosing the activated carbon (26) in the layer plane (E2), connects the at least two fibrous layers (23, 24) at the free edge (27) perpendicular to the layer plane (E2).

3. Filter element according to claim 1 or 2, wherein the adhesive (28) features a chemically curing or a physically setting one-component adhesive.

4. Filter element according to one of the claims 1 or 3, wherein the adhesive (28) features a two-component adhesive.

5. Filter element according to one of the claims 1 to 4, wherein the adhesive (28) is a mixed adhesive, wherein the mixed adhesive comprises at least one chemically curing adhesive and at least one physically setting adhesive.

6. Filter element according to claim 5, wherein the mixed adhesive comprises at least one water-crosslinking, chemically curing adhesive and at least one radiation curable adhesive.

7. Filter element according to one of the claims 1 to 6, wherein the adhesive (28) cures and/or sets using light and/or heat.

8. Filter arrangement (6) having a filter element (8) according to one of the claims 1 to 7 and a filter housing (7) in which the filter element (8) is accommodated, wherein the at least one free edge (27) seals against a wall (32) of the filter housing (7).

9. Method for manufacturing a filter element (8), including the following steps:
provision of a filter medium (9) with at least two fibrous layers (23, 24) and at least one adsorption layer (25) with activated carbon (26), wherein the at least one adsorption layer (25) is disposed between the at least two fibrous layers (23, 24), wherein the filter medium (9) features at least one free edge (27).
folding the filter medium (9), and
applying an adhesive (28) to the at least one free edge (27) of the filter medium (9) to enclose the activated carbon (26) in a layer plane (E2), wherein the free edge (27) of the filter medium (9) forms a free fold front edge (19, 20),
then enclosing the filter medium (9) with an open frame (10) so that it stabilizes the filter medium (9) in such a way that the free fold front edge (19, 20) is disposed in an open area (12) thereof,
wherein the open frame (10) features a sideband (11) and two lateral strips (13, 14) which are connected to one another in such a way that they form a U-shape so that the open area (12) is opposite the sideband.

10. Method according to claim 9, wherein the application of the adhesive (28) to the at least one free edge (27) of the filter medium (9) is realized after the filter medium (9) is folded.

11. Method according to claim 9 or 10, wherein the adhesive (28) features a chemically curing and/or a physically curing adhesive, in particular a chemically curing and/or a physically curing one-component adhesive.

12. Method according to one of the claims 9 to 11, wherein the adhesive (28) features a two-component adhesive.

13. Method according to one of the claims 9 to 12, wherein the adhesive (28) features a two-component adhesive and first of all, a first component of the two-component adhesive and then a second component of the two-component adhesive is applied to the at least one free edge (27) of the filter medium (9).

14. Method according to one of the claims 9 to 13, wherein, after the application of the adhesive (28) to the at least one free edge (27), the adhesive (28) is exposed to light and/or heat.

15. Method according to one of the claims 9 to 14, wherein a package is provided for the filter element (8), and after application of the adhesive (28) to the at least one free edge (27) of the filter medium (9), the filter element (8) is packaged using the package so that one part of a setting process and/or curing process of the adhesive (28) is realized inside the package.

## Revendications

1. Élément filtrant (8) ayant un milieu filtrant plié (9), présentant au moins deux couches fibreuses (23, 24) et au moins une couche d'adsorption (25) avec charbon actif (26), la couche d'adsorption (25), au moins au nombre d'une, étant disposée entre les deux couches fibreuses (23, 24), au moins au nombre de deux, le milieu filtrant (9) présentant au moins une arête libre (27) qui est scellée à l'aide d'un adhésif (28) à durcissement chimique et/ou à prise physique pour enfermer le charbon actif (26) dans un plan de couche (E2), l'arête libre (27) du milieu filtrant (9) formant une arête frontale de pli (19, 20), et l'élément filtrant (8) présentant par ailleurs un cadre ouvert (10) qui entoure le milieu filtrant (9) de telle manière que l'arête frontale de pli libre (19, 20) soit disposée dans une zone ouverte (12) de celui-ci, et le cadre ouvert (10) présentant une bande latérale (11) et deux bandeaux (13, 14) qui sont reliés l'un à l'autre de manière à former un U de sorte que la zone ouverte (12) soit opposée à la bande latérale.

2. Élément filtrant selon la revendication 1, l'adhésif (28) pour inclure le charbon actif (26) dans le plan de couche (E2) reliant les deux couches fibreuses (23, 24), au moins au nombre de deux, l'une à l'autre perpendiculairement par rapport au plan de couche (E2) au niveau de l'arête libre (27).

3. Élément filtrant selon la revendication 1 ou 2, l'adhésif (28) présentant un adhésif à un composant à durcissement chimique ou à prise physique.

4. Élément filtrant selon l'une quelconque des revendications 1 ou 3, l'adhésif (28) présentant un adhésif à deux composants.

5. Élément filtrant selon l'une quelconque des revendications 1 à 4, l'adhésif (28) étant un adhésif hybride, l'adhésif hybride comprenant au moins un adhésif à durcissement chimique et au moins un adhésif à prise physique.

6. Élément filtrant selon la revendication 5, l'adhésif hybride comprenant au moins un adhésif à durcissement chimique à réticulation aqueuse et au moins un adhésif radiodurcissable.

7. Élément filtrant selon l'une quelconque des revendications 1 à 6, l'adhésif (28) durcit et/ou prend à l'aide de la lumière et/ou de la chaleur.

8. Agencement de filtre (6) ayant un élément filtrant (8) selon l'une quelconque des revendications 1 à 7 et un boîtier de filtre (7) dans lequel est logé l'élément filtrant (8), l'arête libre (27), au moins au nombre d'une, étanchant contre une paroi (32) du boîtier de filtre (7).

9. Procédé de fabrication d'un élément filtrant (8), comprenant les étapes suivantes:
mise à disposition d'un milieu filtrant (9) avec au moins deux couches fibreuses (23, 24) et au moins une couche d'adsorption (25) avec charbon actif (26), la couche d'adsorption (25), au moins au nombre d'une, étant disposée entre les deux couches fibreuses (23, 24), au moins au nombre de deux, le milieu filtrant (9) présentant au moins une arête libre (27),
pliage du milieu filtrant (9), et
application d'un adhésif (28) sur l'arête libre (27), au moins au nombre d'une, du milieu filtrant (9) pour inclure le charbon actif (26) dans un plan de couche (E2), l'arête libre (27) du milieu filtrant (9) formant une arête frontale de pli libre (19, 20),
ensuite entourant le milieu filtrant (9) avec un cadre ouvert (10) de sorte que celui-ci stabilise le milieu filtrant (9) de telle manière que l'arête frontale de pli libre (19, 20) soit disposée dans une zone ouverte (12) de celui-ci,
le cadre ouvert (10) présentant une bande latérale (11) et deux bandeaux (13, 14) qui sont reliés l'un à l'autre de manière à former un U de sorte que la zone ouverte (12) soit opposée à la bande latérale.

10. Procédé selon la revendication 9, l'application de l'adhésif (28) sur l'arête libre (27), au moins au nombre d'une, du milieu filtrant (9) étant effectuée après le pliage du milieu filtrant (9).

11. Procédé selon la revendication 9 ou 10, l'adhésif (28) présentant un adhésif à durcissement chimique et/ou à durcissement physique, notamment un adhésif à un composant à durcissement chimique et/ou à durcissement physique.

12. Élément filtrant selon l'une quelconque des revendications 9 à 11, l'adhésif (28) présentant un adhésif à deux composants.

13. Procédé selon l'une quelconque des revendications 9 à 12, l'adhésif (28) présentant un adhésif à deux composants et d'abord un premier composant de l'adhésif à deux composants, puis un second composant de l'adhésif à deux composants étant appliqué sur l'arête libre (27), au moins au nombre d'une, du milieu filtrant (9).

14. Procédé selon l'une quelconque des revendications 9 à 13, après avoir appliqué l'adhésif (28) sur l'arête libre (27), au moins au nombre d'une, l'adhésif (28) étant exposé à la lumière et/ou à la chaleur.

15. Procédé selon l'une quelconque des revendications 9 à 14, un emballage étant mis à disposition pour l'élément filtrant (8) et après l'application de l'adhésif (28) sur l'arête libre (27), au moins au nombre d'une, du milieu filtrant (9), l'élément filtrant (8) est emballé au moyen de l'emballage de sorte qu'une partie du processus de prise et/ou du processus de durcissement de l'adhésif (28) ait lieu à l'intérieur de l'emballage.
